# EUROPÄISCHE PATENTANMELDUNG

(11) **EP 1 855 039 A2**
(43) Veröffentlichungstag der Anmeldung: **14.11.2007**
(21) Anmeldenummer: 07107844.8
(22) Anmeldetag: 09.05.2007
(51) Int. Cl.: F16L 9/19

(54) **Bauelement aus Kunststoff**

(30) Priorität: 09.05.2006 DE 102006021589
(71) Anmelder: Gealan Formteile GmbH, 95145 Oberkotzau (DE)
(72) Erfinder: Braun, Thomas, 95234 Sparneck (DE); Saunus, Christian, 08223 Grünbach (DE); Pöhlmann, Thomas, 95233 Helmbrechts (DE); Schaller, Stefan, 95111 Rehau (DE)
(74) Vertreter: Fleuchaus, Michael A.

(57) **Zusammenfassung**

Bauelement, mit ein wenigstens zwei miteinander verbundenen Kunststoffteilen (4, 5), wobei durch das Bauelement wenigstens zwei, jeweils zum Transport eines Fluids dienende Leitungselemente (2, 3) hindurchgeführt sind. Das Bauelement ist dadurch gekennzeichnet, dass die Leitungselemente, wie beispielsweise Rohrleitungsstücke (2, 3) von solchen Kunststoffmaterialien gebildet sind, die gegenüber dem jeweils in ihnen zu transportierenden Fluid chemisch inert sind.

## Beschreibung

Die Erfindung bezieht sich auf ein Bauelement, das wenigstens zwei aus unterschiedlichen Materialien bestehende und miteinander verbundene Kunststoffteile umfasst und durch das wenigstens zwei jeweils zum Transport eines Fluids dienende Leitungselemente, wie beispielsweise Rohrleitungsstücke hindurchgeführt sind.

Es ist bekannt, dass Fluide je nach ihrer Zusammensetzung, dem Druck, unter dem sie stehen, und ihrer Temperatur sehr unterschiedliche Anforderungen an das Rohrmaterial stellen, in dem sie transportiert werden. Allein der pH-Wert und/oder der Anteil bestimmter lonen und/oder des gelösten Gases wie beispielsweise Sauerstoff eines wässrigen Fluids kann darüber entscheiden, aus welchem Material die Rohrleitung bestehen darf, ob also beispielsweise Kupfer oder Edelstahl oder ein sonstiges Material als Rohrmaterial geeignet ist. Darüber hinaus ist zu beachten, innerhalb welches Bereiches verschiedene Parameter des Fluids schwanken können. Auch die durch von dem Fluid mitgeführte, nicht gelöste Partikel verursachte Reibung kann einen negativen Einfluss auf die Haltbarkeit des Rohrmaterials haben.

In bekannten Heizungsanlagen werden medienführende Kanäle durch Kupferleitungen oder durch formgegebene Leitungssysteme gebildet. Durch den Aufbau der Kanäle im bekannten Stand der Technik ergeben sich folgende Probleme: Die geführten Medien greifen durch ihre Aggressivität die Flächen im Medienkontakt chemisch und/oder materialabtragend, d. h. abrasiv, das Rohrmaterial an. Falls das fluide Medium Trinkwasser ist, muss gewährleistet sein, dass das sich in dem Trinkwasser auflösende oder lösende Rohrmaterial gesundheitlich unbedenklich ist und die Qualität des Trinkwassers nicht merklich beeinflusst. Andererseits zeigen Materialien, die für den Kontakt mit Trinkwasser geeignet, insbesondere auch dauerhaft geeignet sind, reduzierte Materialeigenschaften. Dies ist z. B. wegen der Aggressivität der verschiedenen Medien, insbesondere hervorgerufen durch die hierin gelösten Substanzen, sehr problematisch. Diese können mit Kettenmolekülen von aus Kunststoff gebildeten Rohrleitungen reagieren und dadurch auf die Dauer den Kunststoff angreifen, so dass dieser sich beispielsweise zersetzt und dadurch die Trinkwasserqualität bis hin zur Unbrauchbarkeit herabsetzt. Andererseits bricht irgendwann die Kunststoffleitung, was wegen des dauerhaften Fließens des zusätzlich unter Druck stehenden Wassers in dem Trinkwasserleitungssystem zu einem ständigen Herausfließen des Wassers an der Leckstelle und somit schnell zu einem erheblichen Schaden in dem Gebäude führt. Bei einem Trinkwassersystem ist auch zu berücksichtigen, dass das Trinkwasser auslaufseitig hohe Temperaturen und/oder Drücke aufweisen kann.

Andere Probleme stellen sich in Heizungsverteilersystemen. In der Regel bestehen bei diesen geschlossene Kreisläufe, in denen dem in dem Kreislauf zirkulierenden Wasser eine Vielzahl von Additiven wie Entfrostungsmittel, beispielsweise Glykol, Teer, Öl und dgl. beigesetzt sind. Durch das Entfrostungsmittel wird beispielsweise ein Einfrieren und Platzen der Leitung verhindert, wenn die Temperatur von 0°C unterschritten wird. Teilweise enthalten die Additive Chlor, das freigesetzt werden kann und mit dem Kunststoff reagiert. Beispielsweise wird Polyamid durch Chlor angegriffen. Dabei wird diese Reaktion durch die in dem Heizungswasser vorherrschende höhere Temperatur noch gefördert. Die Problematik wird durch Drucküberlagerung in derartigen Heizungsumlaufsystemen noch erhöht.

Es ist die Aufgabe der Erfindung, ein aus Kunststoff aufgebautes Bauelement zur Verfügung zu stellen, das für den Transport des jeweiligen Fluide geeignet ist.

Erfindungsgemäß wird diese Aufgabe bei einem Bauelement der eingangs genannten Art dadurch gelöst, dass die Leitungselemente für das bzw. die Fluide von solchen Kunststoffmaterialien gebildet sind, die gegenüber dem jeweils in ihnen zu transportierenden Fluid im Wesentlichen chemisch inert sind. Durch die Erfindung ergänzen sich die Wirkungen verschiedener, für spezielle Anwendungseinsätze geeigneter Kunststoffe in synergistischer Weise derart, dass ein komplexes Bauteil aus einer Mehrzahl von Kunststoffen herstellbar ist, bei dem jeder Kunststoff an der Stelle, an der er zum Einsatz kommt, gerade einen spezifischen Nutzen hat.

Vorteilhafte Weiterbildungen der Erfindung ergeben sich aus den Unteransprüchen, der Beschreibung und den Zeichnungen.

In vorteilhafter Weise kommt für das Bauelement ein duro- und/oder thermoplastischer Kunststoff zum Einsatz, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, lonomere, Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen.

Mit Vorteil wird dabei vorgesehen, dass wenigstens eines der Kunststoffmaterialien so gewählt ist, dass es gegen eine Temperaturwechselbeanspruchung durch wenigstens ein Fluid inert ist.

In vorteilhafter Weise zeichnet sich ein erfindungsgemäßes Bauelement dadurch aus, dass der Kunststoff, der ein wechselnden Temperaturen eines Fluids ausgesetztes Leitungselementes bildet, entweder thermische Spannungen verkraftet oder im Bereich der Leitung Elemente zum Ausgleich von Längenausdehnungen des Kunststoffs infolge einer erhöhten Temperatur aufweist.

Vorzugsweise wird wenigstens eines der Kunststoffmaterialien so gewählt, dass es gegen eine Druckwechselbelastung in einem Leitungselement inert ist.

Als nützlich erweist es sich gemäß einer Weiterbildung der Erfindung auch, wenn das Bauelement auf seiner von Fluid bereiten Oberfläche wenigstens bereichsweise von einem Kunststoff gebildet ist, der gegen eine in dem Bereich bestehende Temperatur-, Druck- oder Strahlungsbelastung oder eine Belastung durch eine chemisch aggressive Substanz inert ist.

Die von dem Kunststoff umschlossenen Bauelemente sind vorzugsweise so gestaltet, dass die Leitungselemente formschlüssig, kraftschlüssig, stoffschlüssig und/oder durch einen Materialverbund der Kunststoffmaterialien umschlossen sind.

Vorzugsweise sind die Kunststoffmaterialien auch außerhalb der Leitungselemente formschlüssig, kraftschlüssig und/oder verbundschlüssig miteinander verbunden.

Insbesondere lässt sich ein erfindungsgemäßes in Verbindung mit einem Leitungselement für den Transport von Trinkwasser einsetzen, das beispielsweise innenseitig eine Auskleidung aus einem teilaromatischen Polyamid und außenseitig Polyamid aufweist.

In Kombination mit dem für die Durchleitung von Trinkwasser geeigneten Leitungselement oder vorzugsweise unabhängig hiervon weist das Bauelement ein weiteres Leitungselement auf, das beispielsweise für den Transport von Heizungswasser vorgesehen ist. Dieses weist dann beispielsweise innenseitig eine Auskleidung aus Polyphenylensulfid und ist außenseitig aus Polyamid hergestellt.

In vorteilhafter Weise ist das Bauelement auch mit einem Wärmetauscher kombiniert oder ist Teil eines eine Mehrzahl von Bauelementen umfassenden Wärmetauschers. Hierbei sind zwei in verschiedenen Leitungssystemen zirkulierende Fluide vorhanden, die miteinander in wärmeleitenden Kontakt über auf dem Bauelement integrierte Kunststoffwandungen stehen, wobei die Kunststoffwandungen jeweils fluidbezogen resistent sind.

Von Vorteil ist dabei ein Bauelement, bei dem der Wärmetauscher als Rohrwärmetauscher mit zylindrisch einander umgebenden Rohrleitungsstücken oder als Plattenwärmetauscher ausgebildet ist.

Zur Erhöhung der Wärmeleitfähigkeit wird mit Vorteil vorgesehen, dass die Kunststoffwandungen einen wärmeleitenden Füllstoff, insbesondere Graphit oder Metallpartikel und/oder Mineralpartikel, Kombinationen hiervon und dergleichen enthalten.

In vorteilhafter Weise werden die oben beschriebenen Bauelemente, die jeweils wenigstens zwei oder mehr Kunststoffe oder Kunststoffmischungen enthalten, in einem Spritzgussverfahren hergestellt, wobei ein Verbund durch Formschluss, und/oder durch Materialschluss entsteht. Beispielsweise wird zunächst ein erster Kunststoff mit einem niedrigen Schmelzpunkt in eine Spritzgussform hineingegossen, anschließend wird der auszugießende Raum beispielsweise durch das Zurückziehen von Schiebern vergrößert und ein zweiter Kunststoff wird in den zusätzlich entstehenden Raum hineingegossen. Wenn der zweite Kunststoff einen höheren Schmelzpunkt als der erste Kunststoff aufweist und der zweite Spritzvorgang erfolgt, bevor der erste Kunststoff vollends abgekühlt ist, wird der erste Kunststoff durch den einfließenden zweiten Kunststoff wieder, wenigstens oberflächlich, angeschmolzen und verflüssigt, so dass ein Übergangsbereich zwischen beiden Kunststoffen entsteht, in denen ein inniger Materialverbund erzeugt wird. Es versteht sich, dass hierbei ein Materialverbund in Kombination mit einem Formschluss entsteht.

Eine kraftschlüssige Verbindung zweier Kunststoffteile im Bereich eines Bauelements ist dadurch möglich, dass die Kunststoffteile "ineinandergesteckt" werden und hierbei in beiden Kunststoffteilen durch die Steckverbindung Spannungen entstehen. Der Kraftschluss kann aber auch dadurch erzeugt werden, insbesondere in Kombination mit einem Formschluss, dass zwei Kunststoffelemente zusammengegossen werden, die sich durch ihre Temperaturausdehnung ausreichend unterschieden, so dass im abgekühlten Zustand Spannungen zwischen ihnen bestehen, die ausgenutzt werden, um eine feste kraftschlüssige Verbindung zwischen ihnen zu erzeugen.

Ein erfindungsgemäßes Bauelement lässt sich auch dafür einsetzen, dass es einerseits über einen ersten, mit der nötigen Resistenz ausgestatteten Kunststoff geeignet ist, als Rohrleitungsstück für ein Rohrleitungssystem, beispielsweise für einen Kühler in einem Kraftfahrzeug, zu dienen, andererseits aber mit einem zweiten Kunststoff ausgestattet ist, der geeignet ist, eine dauerhaft haltende Verbindung mit einem starren Element, beispielsweise aus Metall, zu gewährleisten.

Die nachstehend beschriebene Erfindung bietet die Möglichkeit, funktionsbezogen, lokal und anwendungsspezifisch Materialkombinationen dort einzusetzen, wo im beschriebenen Stand der Technik nur sehr teure Einzelmaterialien als Lösungen bekannt sind. Ziel der Erfindung ist es somit, ein medienführendes System zu schaffen oder Bauteile hierfür zur Verfügung zu stellen, die mit wenigstens einem Medium in Kontakt kommen, wobei die Bauteile in einem Prozessschritt aus mindestens zwei anwendungsgeeigneten Materialien hergestellt werden. Die Realisierung geschieht mittels eines Zwei- oder Mehrkomponenten-Spritzgießprozesses.

In Anwendung dieser Erfindung werden Materialien, die den für das entsprechende Fluid geforderten Ansprüchen an die Materialbeständigkeit genügen, nur dort eingesetzt, wo es jeweils erforderlich ist. Im Restbereich der Anwendung werden eine oder mehrere Materialkomponenten verteilt so eingesetzt, dass das "schwächere" Material mit einer chemischen oder thermischen Beständigkeit durch die zweite und/oder weitere Materialkomponente gestützt, miteinander verbunden und/oder umgeben wird. Dies bedeutet beispielsweise, dass ein Fluid, das chemisch sehr aggressiv ist, nur im unmittelbaren Fluidkontakt von einem ersten Kunststoff umgeben ist, der gegen das Fluid beständig ist, dass dieser erste Kunststoff seinerseits jedoch von einem zweiten Kunststoff umgeben ist, der für die erforderliche Festigkeit und Stabilität des Rohrleitungsstücks sorgt. Der zweite Kunststoff zeichnet sich dann dadurch aus, dass er vorzugsweise kostengünstiger ist und/oder eine größere Festigkeit als der erste Kunststoff aufweist, gleichzeitig muss der zweite Kunststoff nicht so resistent wie der erste Kunststoff gegenüber einem aggressiven Medium sein.

Durch die Erfindung ist es somit möglich, Materialpaarungen einzusetzen, in denen jeder zum Einsatz kommende Kunststoff für einen bestimmten Zweck optimiert ist, im übrigen aber solche Materialien verwendet werden, die den Anforderungen genügen und kostengünstig in Herstellung und Gestehung sind.

Wirtschaftlich bietet die Erfindung den Vorteil, Materialien immer anwendungsbezogen nur dort einzusetzen, wo es die Anforderungen bedingen. Durch die Erfindung wird somit ein Mehrkomponenten-Bauteilschutzelement für ein medienführendes, druckloses und/oder druckbeaufschlagtes Leitungssystem und/oder wenigstens einen Abschnitt eines Bauteils, insbesondere eines Schutzbereichs, geschaffen, das sich durch den Einsatz von Mehrkomponenten-Materialien auszeichnet, wobei immer das anwendungsgeeignete Material der jeweiligen Anforderung zugeordnet ist. Dies bedeutet beispielsweise, dass durch den Einsatz der Mehrkomponententechnik medienführende Leitungssysteme so aufgebaut werden, dass sich verschiedene Kanalsysteme in verschiedenen Materialkombinationen aufbauen lassen. In den verschiedenen Kanalsystemen lassen sich durch den gezielten anwendungsspezifischen Materialeinsatz funktionale Trennungen der einzelnen Kanalsysteme realisieren. Der Aufbau der einzelnen Kanalsysteme oder Schutzbereiche lässt sich durch ein formschlüssiges und/oder kraftschlüssiges Umschließen der unterschiedlichen Materialkomponenten erreichen. Mit Vorteil lässt sich das Mehrkomponentensystem so einsetzen, dass die einzelnen Kanalsysteme über eine Kombination von Wandstärkenverhältnissen und/oder Materialmengenverhältnissen getrennt so aufgebaut werden, dass im Medienkontakt bestimmte Verschleißschichten aufgebaut werden.

Die Erfindung bezieht sich auch auf ein Spritzgießverfahren zum Herstellen eines Bauelements, wie es oben beschrieben wurde, wobei in einem einzigen Prozessschritt wenigstens zwei Kunststoffe in einer Spritzgießform verarbeitet werden.

Nachstehend wird die Erfindung in Ausführungsbeispiel anhand der Zeichnungen näher erläutert.

Es zeigen:
Fig. 1 -13 perspektivische Draufsichten, teilweise unter Andeutung der Schnittlinien, auf Varianten eines zwei parallel nebeneinander verlaufende Rohrleitungsstücke aufweisenden Bauelements, das aus wenigstens zwei verschiedenen Kunststoffen aufgebaut ist,
Fig. 14-16 perspektivische Draufsichten auf ein aus wenigstens zwei verschiedenen Kunststoffen aufgebautes Bauelement, das ein Y-förmiges Rohrleitungsstück und eine Flanschplatte umfasst, und
Fig. 17, 18 Schnittansichten zu den Draufsichten gemäß Fig. 14 bis 16.

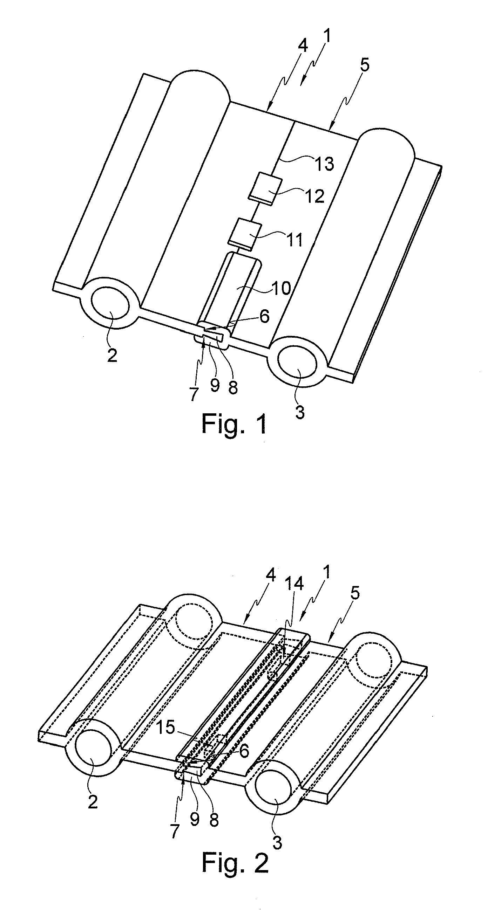

Ein Bauelement 1 (Fig. 1) ist Teil eines medienführenden Leitungssystems, das ein erstes Rohrstück 2 für ein erstes Kanalsystem und ein zweites Rohrstück 3 für ein zweites Kanalsystem umfasst. Beide Rohrstücke 2, 3 sind adaptiert und an die jeweils in ihnen zu transportierenden Fluide angepasst, beispielsweise ausschließlich in ihrem Inneren durch eine fluidspezifische Innenauskleidung. Anderseits sind die beiden Rohrstücke 2, 3 jeweils in einem Kunststoffstück 4 bzw. 5 integriert oder werden monolithisch von diesem gebildet. Beide Kunststoffstücke 4, 5 sind formschlüssig und/oder kraftschlüssig und/oder materialverbundschlüssig miteinander verbunden.

Hierzu weist das Stück 4 eine vorspringende und zusätzlich Einschnürungen 6, 7 bildende Nase 8 auf, die auf ihrer Unter- wie auf ihrer Oberseite von einem Verbindungselement 9 bzw. 10 des anderen Stücks 5 umschlossen ist. Andererseits sind vorzugsweise zusätzlich oder alternativ zwei als Klammern wirkende Elemente 11, 12 vorhanden, die beispielsweise auf beiden Stücken 4, 5 aufgeschmolzen sind oder nach unten weisende und die Stücke 4, 5 wenigstens teilweise durchdringende Vorsprünge aufweisen.

Andererseits ist alternativ oder zusätzlich vorgesehen, dass die beiden Stücke 4, 5 an ihrer Verbindungsnaht 13 miteinander verschmolzen sind oder dass eines der beiden Stücke 4, 5 an das jeweils andere angeschmolzen ist.

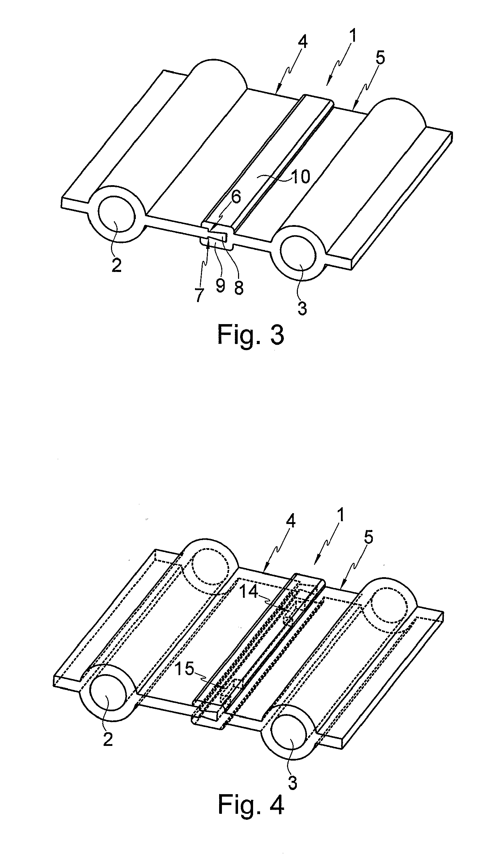

In einer anderen Variante ist das Bauelement 1 (Fig. 2 - 4) aus zwei Stücken 4, 5 gebildet, wobei das Stück 4 eine entlang des Verbindungsbereichs von seiner Vorderkante bis zu seiner Hinterkante durchgehende, in ihrem Inneren nur von zwei jeweils bezüglich der äußeren Kanten des Bauelements 1 rechtwinklige durch Auskragungen bildendes Material des anderen Stücks 5 aufgefüllte Auskerbungen 14, 15 (Fig. 2) unterbrochene Nase 8 aufweist, die wieder die Einschnürungen 6, 7 auf ihrer Unter- bzw. ihrer Oberseite umfasst. In gleicher Weise, wie in Fig. 1 dargestellt, wird die Nase 8 von den Vorsprüngen oder Verbindungselementen 9, 10 umgriffen, die ebenfalls von der Vorderkante bis zur Hinterkante des Stücks 5 reichen.

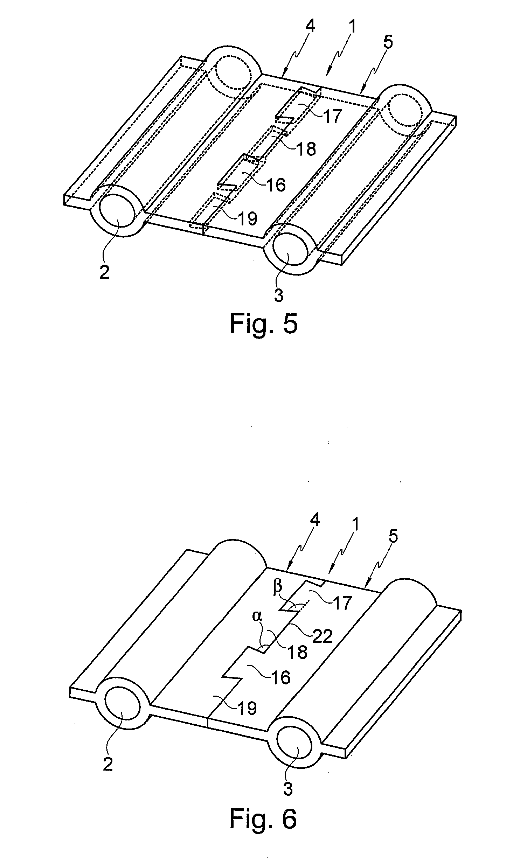

In einem weiteren Ausführungsbeispiel (Fig. 6-8) weisen die beiden Stücke 4, 5 des Bauelements 1 in ihrem Verbindungsbereich ineinanderragende Vorsprünge 16, 17 bzw. 18, 19 auf. Die Vorsprünge 16 bis 19 erstrecken sich ihrer Höhe nach von der oberen Oberfläche nach unten über etwa die halbe Höhe des Bauelements 1. Jeder der Vorsprünge 16 bis 19 weist Seitenkanten 20, 21 auf, die bezüglich einer Trennlinie 22 zwischen den beiden Stücken 4, 5 einen stumpfen Winkel α bzw. einen überstumpfen Winkel β bilden.

Ähnlich wie die Vorsprünge 16 bis 19 sich von der Oberseite des Bauelements 1 erstrecken, sind Vorsprünge 23 bis 26 vorhanden, die sich von der Unterseite des Bauelements 1 bis auf etwa die halbe Höhe erstrecken, so dass sie beispielsweise an die Unterseite der Vorsprünge 16 bis 19 angrenzen. Die Vorsprünge 23 bis 26 sind vorzugsweise derart versetzt gegenüber den darüberliegenden Vorsprüngen 16 bis 19 angeordnet, dass die Seitenkanten der Vorsprünge 16 bis 19, 23 bis 26 jeweils nicht übereinander zu liegen kommen. Auch die Seitenkanten der Vorsprünge 23 bis 26 weisen gegenüber der Trennlinie 22 vorzugsweise stumpfe oder überstumpfe Winkel auf.

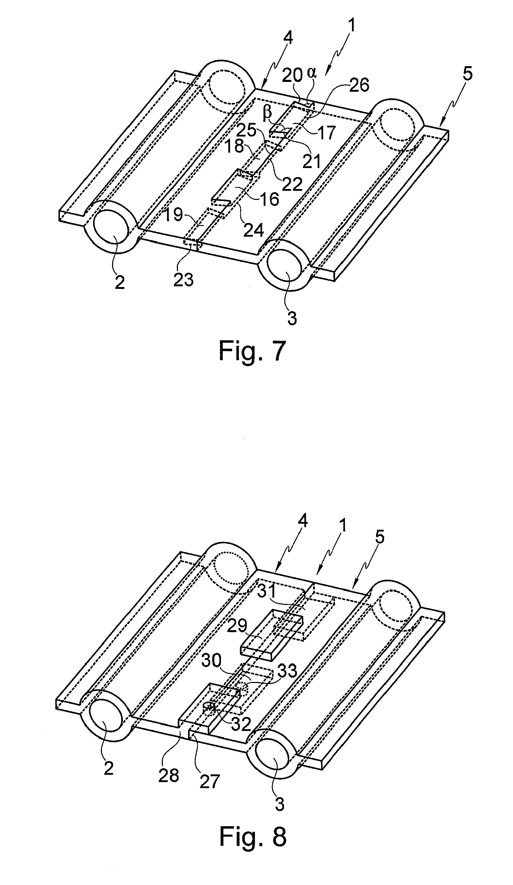

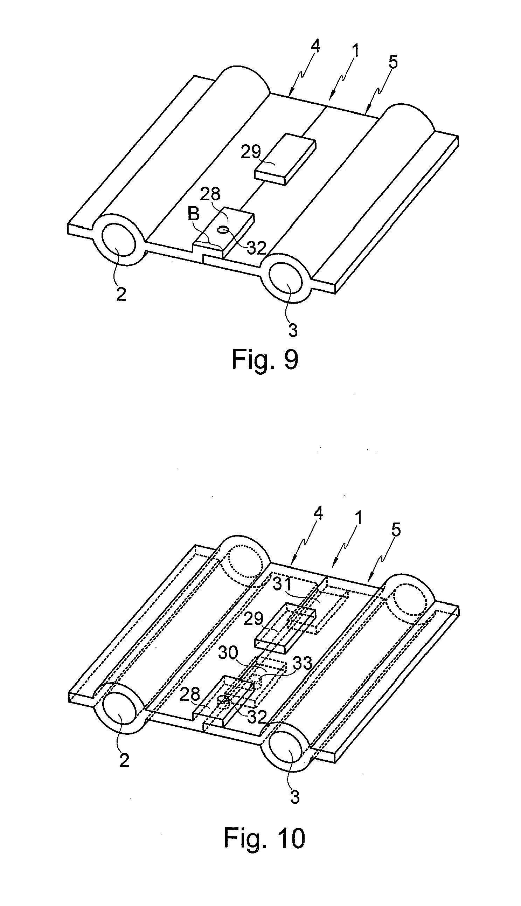

In einer weiteren Ausführungsform (Fig. 8 bis 10) ist weist das Stück 5 eine durchgehende ununterbrochene Seitenkante 27 bezüglich des Stücks 4 auf. Dieses hingegen weist nach oben wie nach unten angesetzte oder in einem gemeinsamen Spritzvorgang erzeugte quaderförmige Vorsprünge 28 bis 31 auf. Die Vorsprünge 28, 29 sind auf der Oberseite des Stücks 4 derart angebracht, dass sie zu den Vorsprüngen 30, 31 auf der Unterseite des Stücks 5 versetzt sind. Die Vorsprünge 28 bis 31 erstrecken sich ihrer Breite B (Fig. 9) nach etwa zur Hälfte oberhalb des Stücks 4, zur Hälfte überragen sie dieses bzw. ragen auf seiner Unterseite in Richtung zu dem Stück 5 hinaus, so dass quer zu der durch die Trennlinie 23 gegebenen Richtung eine formschlüssige Verbindung zwischen den Stücken 4, 5 geschaffen wird.

Dadurch, dass in die Vorsprünge 28, 30 jeweils zylinderförmige Vorsprünge 32, 33 des Stücks 5 hineinragen, wird eine auch in den beiden anderen Raumrichtungen formschlüssige Verbindung zwischen den beiden Stücken 4, 5 geschaffen.

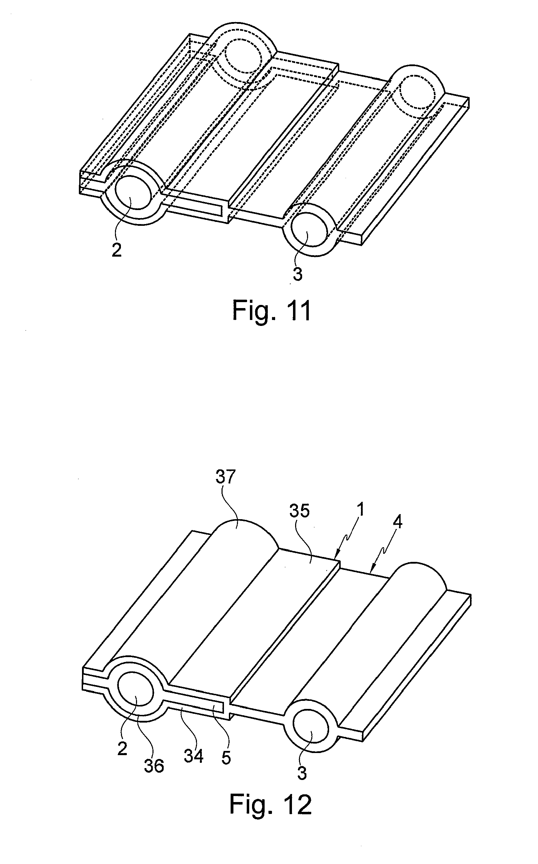

In einer weiteren Ausführungsform der Erfindung (Fig. 11 bis 13) wird eine Verbindung zwischen den Stücken 4, 5 geschaffen, in der das Stück 5 sich in Richtung zu dem Stück 4 erstreckende und dieses sowohl von der Unterseite als auch von der Oberseite vollständig überdeckende Vorsprünge 34, 35 aufweist. Dabei sind die Oberflächen der Vorsprünge 34, 35 im Wesentlichen koplanar zu der Oberfläche des Stücks 4. Dies heißt die Oberflächen der Vorsprünge sind dort eben wo auch die Oberflächen des Stücks 4 eben sind und sind dort zylindermantelförmig, wo durch das Rohrstück 2 im Bereich des Stücks 4 eine Zylindermantelfläche vorhanden ist. Diese ist von entsprechenden Zylindermantelflächen 36, 37 des Vorsprungs 34 bzw. 36 übermantelt.

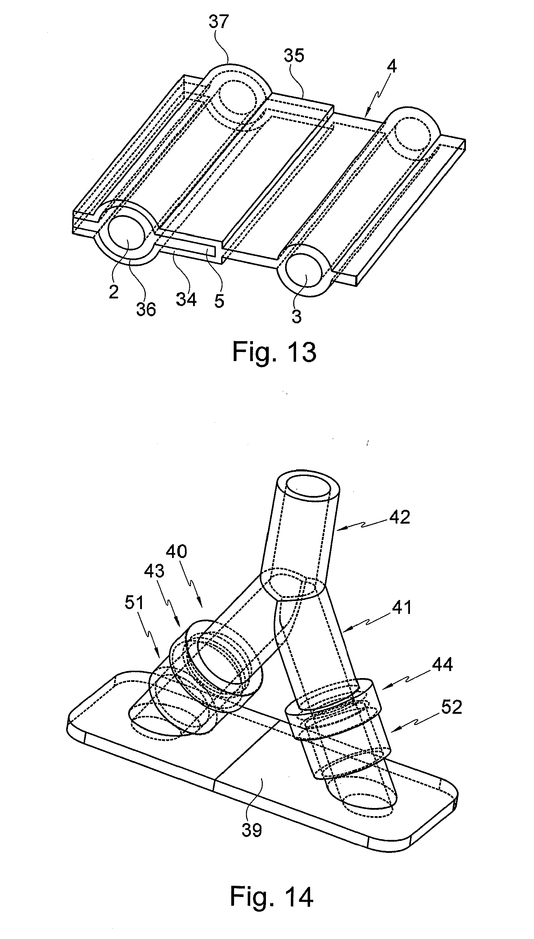

In einem weiteren Ausführungsbeispiel (Fig. 14 bis 18) ist ein Y-förmiges Kupplungsstück 38 vorhanden, das sich auf einer Flanschplatte 39 in der Weise erstreckt, dass aus dieser zweier Rohrstücke 40, 41 herausragen, die unter einem spitzen Winkel zu einem Rohrstück 42 zusammenlaufen. Jedes der beiden Rohrstücke 40, 41 umfasst eine Muffe 43 bzw. 44.

Die Muffen 43, 44 weisen jeweils ein zu einem Rohrteil 45, 46 der Rohrstücke 40, 41 gehöriges Innenteil 47 bzw. 48 auf. Das Innenteil 47, 48 weist einen ringförmigen Flansch 49 bzw. 50 auf, der in ein Außenteil 51, 52 der Muffe 43 bzw. 44 hineinragt. Die Außenteile 51, 52 sind so ausgestaltet, dass sie die Flansche 49, 50 und die oberen Teile der Rohrteile 45, 46 überkragen, wobei die Außenteile 51, 52 in ihren die Rohrteile 45, 46 überragenden Bereichen im wesentlichen die gleiche Dicke aufweisen.

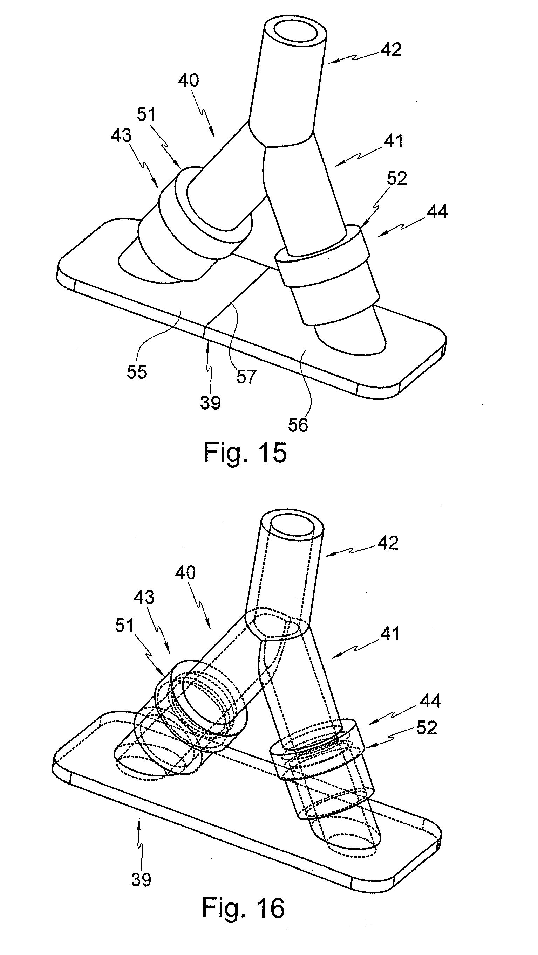

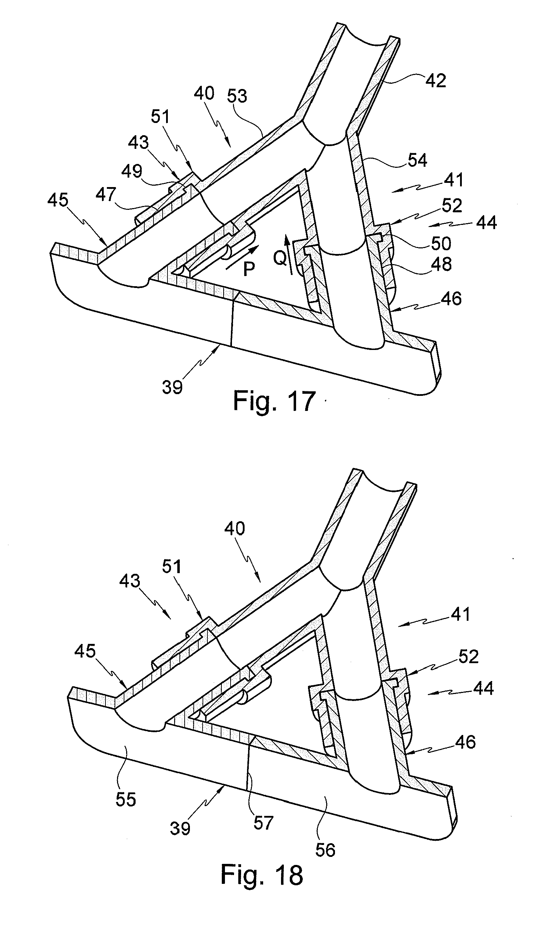

Dadurch, dass die Außenteile 51, 52 der Muffen 43 bzw. 44 die Innenteile 47 bzw. 49 der Muffen 43 bzw. 44 überragen und vollständig überdecken, entsteht eine unlösbare formschlüssige Verbindung zwischen den Rohrteilen 45, 46 einerseits und Rohrteilen 53, 54 der Rohrstücke 40, 41 oberhalb der Muffen 43, 44 andererseits. Dabei können die Rohrteile 45, 46 aus einem Kunststoff bestehen, der jeweils für das in ihnen geführte Fluid geeignet ist, während die Rohrteile 53, 54 und das Rohrstück 42 in ihren Kunststoffzusammensetzungen adaptiert sein können an das durch die Durchmischung von zwei aus Richtung von Pfeilen P, Q zusammenfließenden Fluiden entstehende Durchmischungsfluid. Das Durchmischungsfluid kann dabei nicht nur durch eine rein quantitative Durchmischung zustande kommen, sondern auch durch eine zusätzliche chemische Reaktion zwischen den Fluiden oder von in ihnen enthaltenen Inhaltsstoffen. Es versteht sich, dass im Rahmen der Erfindung auch vorgesehen sein kann, dass sich das Material, aus dem die Rohrteile 45, 46 bestehen, auch bis in den direkten Verbindungsbereich der beiden Rohrstücke 40, 41 zu dem Rohrstück 42 und bis in dieses hinein erstrecken kann, so dass der Materialübergang zwischen einem ersten Kunststoffmaterial und einem zweiten Kunststoffmaterial erst im Bereich des Rohrstücks 42 vollzieht. Jedoch kann der Übergang zwischen zwei verschiedenen Kunststoffen in derselben Weise realisiert werden, wie anhand der Muffen 43, 44 dargestellt ist. Die Flanschplatte 39 besteht entweder aus einem einzigen Plattenelement oder, wie in Fig. 15 und 18 dargestellt, aus zwei Einzelteilen 55, 56, die entlang ihrer Trennfläche 57 in gleicher oder ähnlicher Weise miteinander verbunden sein können, wie anhand der Figuren 1 bis 13 dargestellt ist. Das Einzelteil 55 ist monolithisch mit dem Rohrteil 45. Der für die Teile 45, 55 eingesetzte Kunststoff ist an das in dem Rohrteil geführte Fluid angepasst, während das Rohrteil 46 und das Einzelteil 56 in ihren Eigenschaften gemeinsam an ein durch sie hindurch geführtes Fluid angepasst sind.

## Patentansprüche

1. Bauelement (1), das wenigstens zwei aus unterschiedlichen Materialien bestehende und miteinander verbundene Kunststoffteile (4, 5) umfasst und durch das wenigstens zwei jeweils zum Transport eines Fluids dienende Leitungselementes, wie beispielsweise Rohrleitungsstücke (2, 3; 40 bis 42) hindurchgeführt sind, **dadurch gekennzeichnet, dass**
die Leitungselemente (2, 3; 40 bis 42) von solchen Kunststoffmaterialien gebildet sind, die gegenüber dem jeweils in ihnen zu transportierenden Fluid chemisch inert sind.

2. Bauelement (1) nach Anspruch 1 oder 2, **dadurch gekennzeichnet, dass**
der Kunststoff ein duro- und/oder thermoplastischer Kunststoff ist, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, lonomere, Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen.

3. Bauelement (1) nach Anspruch 1 oder 2, **dadurch gekennzeichnet, dass**
wenigstens eines der Kunststoffmaterialien so gewählt ist, dass es gegen eine Temperaturwechselbeanspruchung durch wenigstens ein Fluid inert ist.

4. Bauelement (1) nach Anspruch 3, **dadurch gekennzeichnet, dass**
der Kunststoff, der ein wechselnden Temperaturen eines Fluids ausgesetztes Leitungselement (2, 3; 40 bis 42) bildet, entweder thermische Spannungen verkraftet oder im Bereich des Leitungselementes (2, 3; 40 bis 42) Elemente zum Ausgleich von Längenausdehnungen des Kunststoffs infolge einer erhöhten Temperatur aufweist.

5. Bauelement (1) nach einem der Ansprüche 1 bis 4, **dadurch gekennzeichnet, dass**
wenigstens eines der Kunststoffmaterialien so gewählt ist, dass es gegen eine Druckwechselbelastung in einem Leitungselement (2, 3; 40 bis 42) inert ist.

6. Bauelement (1) nach einem der Ansprüche 1 bis 5, **dadurch gekennzeichnet, dass**
es auf seiner von Fluid berührten Oberfläche oder Oberflächenabschnitt wenigstens bereichsweise von einem Kunststoff gebildet ist, der gegen eine in dem Bereich bestehende Temperatur-, Druck- oder Strahlungsbelastung oder eine Belastung durch eine chemisch aggressive Substanz inert ist.

7. Bauelement (1) nach einem der Ansprüche 1 bis 6, **dadurch gekennzeichnet, dass**
die Leitungselemente (2, 3; 40 bis 42) formschlüssig, kraftschlüssig, stoffschlüssig und/oder durch einen Materialverbund der Kunststoffmaterialien umschlossen sind.

8. Bauelement (1) nach einem der Ansprüche 1 bis 7, **dadurch gekennzeichnet, dass**
die Kunststoffmaterialien außerhalb der Leitungselemente (2, 3; 40 bis 42) formschlüssig, kraftschlüssig, stoffschlüssig und/oder verbundschlüssig miteinander verbunden sind.

9. Bauelement (1) nach einem der Ansprüche 1 bis 8, **dadurch gekennzeichnet, dass**
es einen Wärmetauscher trägt, wobei zwei in verschiedenen Systemen zirkulierende Fluide in wärmeleitenden Kontakt über auf dem Bauelement integrierte Kunststoffwandungen haben und wobei die Kunststoffwandungen jeweils fluidbezogen resistent sind.

10. Bauelement (1) nach Anspruch 9, **dadurch gekennzeichnet, dass**
der Wärmetauscher als Rohrwärmetauscher mit zylindrisch einander umgebenden Rohrleitungsstücken (2, 3; 40 bis 42) oder als Plattenwärmetauscher ausgebildet ist.

11. Bauelement (1) nach Anspruch 9 oder 10, **dadurch gekennzeichnet, dass**
die Kunststoffwandungen einen wärmeleitenden Füllstoff, insbesondere Graphit und/oder Metallpartikel und/oder Mineralpartikel oder dergleichen, enthalten.

12. Bauelement nach einem der Ansprüche 1 bis 11, **dadurch gekennzeichnet, dass**
zwei der Rohrstücke (41, 42) wenigstens in Teilen (45, 46) mit einer Flanschplatte (39) verbunden sind.

13. Bauelement nach Anspruch 12, **dadurch gekennzeichnet, dass**
die Flanschplatte (39) aus wenigstens zwei Einzelteilen (55, 56) zusammengesetzt ist, die insbesondere formschlüssig miteinander verarbeitet sind.

14. Spritzgießverfahren zum Herstellen eines Bauelements nach einem der Ansprüche 1 bis 13, **dadurch gekennzeichnet, dass**
in einem einzigen Prozessschritt wenigstens zwei Kunststoffe in einer Spritzgießform verarbeitet werden.
